# EUROPEAN PATENT APPLICATION

(11) **EP 4 776 349 A1**
(43) Date of publication of application: **15.07.2026**
(21) Application number: 24877544.7
(22) Date of filing: 11.10.2024
(51) Int. Cl.: H01M 4/66, H01M 4/62, H01M 4/04, H01M 10/052, H01M 50/247, H01M 4/02

(54) **BATTERY COMPRISING BUFFER LAYER**

(30) Priority: 11.10.2023 KR 20230134936; 21.11.2023 KR 20230162006
(71) Applicant: Samsung Electronics Co., Ltd., Suwon-si, Gyeonggi-do 16677 (KR); IUCF-HYU (Industry-University Cooperation Foundation Hanyang University), Seoul 04763 (KR)
(72) Inventor: LEE, Yeonil, Suwon-si, Gyeonggi-do 16677 (KR); KIM, Hansu, Seoul 04763 (KR); YOO, Mikyong, Suwon-si, Gyeonggi-do 16677 (KR); YOO, Hyundong, Seoul 04763 (KR); HWANG, Junho, Seoul 04763 (KR)
(74) Representative: Gulde & Partner
(86) International application number: PCT/KR2024/015386
(87) International publication number: WO 2025/080009

(57) **Abstract**

The present disclosure relates to a battery. The battery according to one embodiment of the present disclosure comprises: a cathode; an anode spaced apart from the cathode; and a separator disposed between the cathode and the anode, wherein the anode includes: a current-collecting layer including a metal material; an electrode layer which is spaced apart from the current-collecting layer and which includes a plurality of pores; and a buffer layer which is disposed between the current-collecting layer and the electrode layer and which includes a binder mixed with conductive carbon, and the binder can include a compound having an elastic modulus.

## Description

### [Technical Field]

Various embodiments of the disclosure relate to a battery, e.g., an electronic device including a buffer layer.

### [Background Art]

With the remarkable advancement of information and communication technology and semiconductor technology, the distribution and use of various electronic devices are rapidly increasing. Recent electronic devices are being developed to be portable and capable of communication.

An electronic device may refer to a device that performs a specific function according to a mounted program, such as home appliances, electronic organizers, portable multimedia players, mobile communication terminals, tablet PCs, video/audio devices, desktop/laptop computers, or vehicle navigation systems. For example, such electronic devices may output stored information as sound or video. As the integration density of electronic devices increases and ultra-high-speed, high-capacity wireless communication becomes common, recently, various functions may be mounted on a single electronic device such as a mobile communication terminal. For example, not only a communication function but also an entertainment function such as a game, a multimedia function such as music/video playback, a communication and security function such as mobile banking, or a schedule management or electronic wallet function are being integrated into a single electronic device. These electronic devices have been downsized to be conveniently carried by users.

The above-described information may be provided as related art for the purpose of helping understanding of the disclosure. No assertion or determination is made as to whether any of the above-described content may be applied as prior art in relation to the disclosure.

### [Detailed Description of the Invention]

### [Technical Solution]

A battery according to an embodiment of the disclosure may include a cathode, an anode spaced apart from the cathode, and a separator disposed between the cathode and the anode. The anode may include a current collection layer including a metallic material, an electrode layer spaced apart from the current collection layer and including a plurality of pores, and a buffer layer disposed between the current collection layer and the electrode layer and including a binder mixed with a conductive carbon. The binder may include a compound having an elastic modulus.

An electronic device according to an embodiment of the disclosure may include a housing, a display seated on the housing, and a battery disposed inside the housing. The battery may include a cathode, an anode spaced apart from the cathode, and a separator disposed between the cathode and the anode. The anode may include a current collection layer including a metallic material, an electrode layer spaced apart from the current collection layer and including a plurality of pores, and a buffer layer disposed between the current collection layer and the electrode layer and including a binder mixed with a conductive carbon. The binder may include a compound having an elastic modulus.

### [Brief Description of Drawings]

The above-described aspects or other aspects, configurations and/or advantages of an embodiment of the disclosure may become clearer through the following detailed description with reference to the accompanying drawings.
FIG. 1 is a block diagram illustrating an electronic device in a network environment, according to various embodiments.
FIG. 2 is a front perspective view illustrating an electronic device according to an embodiment of the disclosure;
FIG. 3 is a rear perspective view illustrating an electronic device according to an embodiment of the disclosure;
FIG. 4 is a front exploded perspective view illustrating an electronic device according to an embodiment of the disclosure;
FIG. 5 is a rear exploded perspective view illustrating an electronic device according to an embodiment of the disclosure;
FIG. 6 is an exploded view illustrating a portion of a battery according to an embodiment of the disclosure.
FIG. 7 is a cross-sectional view illustrating a portion of a battery according to an embodiment of the disclosure.
FIG. 8 is a block diagram illustrating a manufacturing process of a battery according to an embodiment of the disclosure.
FIG. 9 is a view illustrating an effect of a battery according to an embodiment of the disclosure.
FIG. 10 is a view illustrating an effect of a battery according to an embodiment of the disclosure.

Throughout the accompanying drawings, similar reference numbers may be allocated to similar portions, configurations, and/or structures.

### [Mode for Carrying out the Invention]

The following description of the accompanying drawings may provide an understanding of various exemplary implementations of the disclosure including the claims and their corresponding contents. The specific embodiments disclosed in the following description entail various specific details to aid understanding, but are regarded as one of various embodiments. Accordingly, it will be understood by those skilled in the art that various changes and modifications may be made to the various implementations described in the disclosure without departing from the scope and spirit of the disclosure. Further, descriptions of well-known functions and configurations may be omitted for clarity and conciseness.

The terms and words used in the following description and claims are not limited to the bibliographical meaning, but may be used to clearly and consistently describe an embodiment of the disclosure. Therefore, it will be apparent to those skilled in the art that the following description of various implementations of the disclosure is provided only for the purpose of description, not for the purpose of limiting the disclosure defined as the scope of the claims and equivalent thereto.

It should be understood that the singular forms "a", "an", and "the" include plural meanings unless the context clearly indicates otherwise. Thus, as an example, "a component surface" may be interpreted as including one or more of the surfaces of a component.

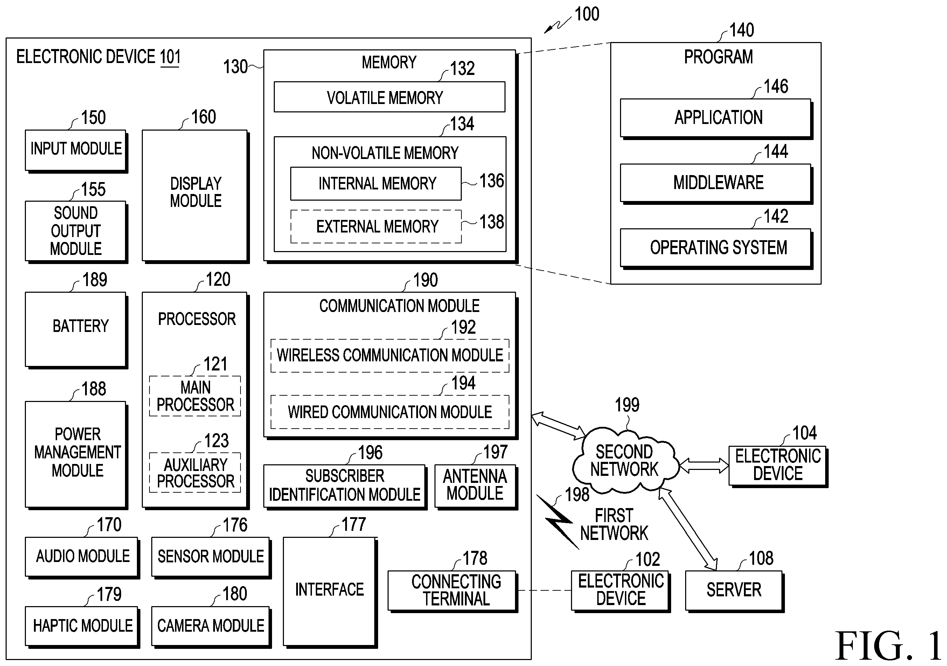

FIG. 1 is a block diagram illustrating an electronic device 101 in a network environment 100, according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

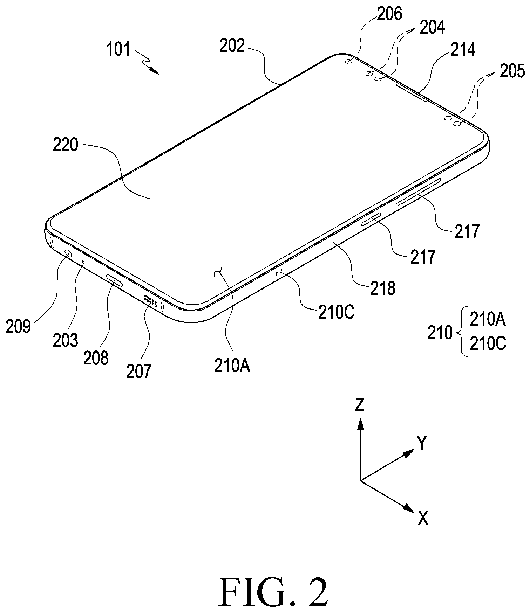

FIG. 2 is a front perspective view illustrating an electronic device according to an embodiment of the disclosure;

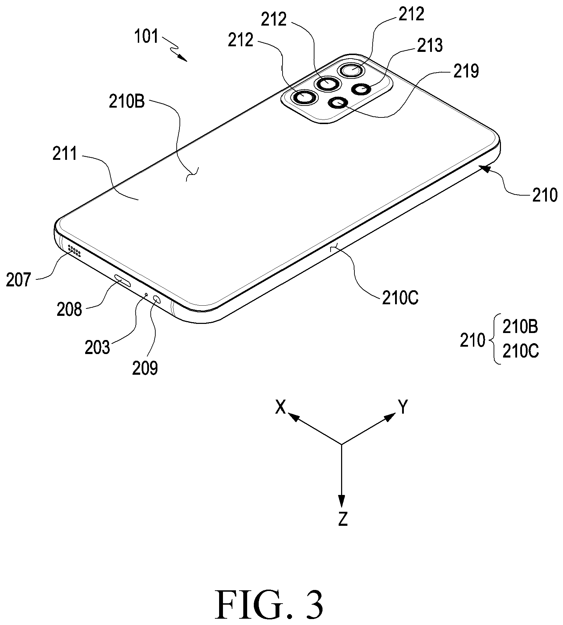

FIG. 3 is a rear perspective view illustrating an electronic device according to an embodiment of the disclosure;

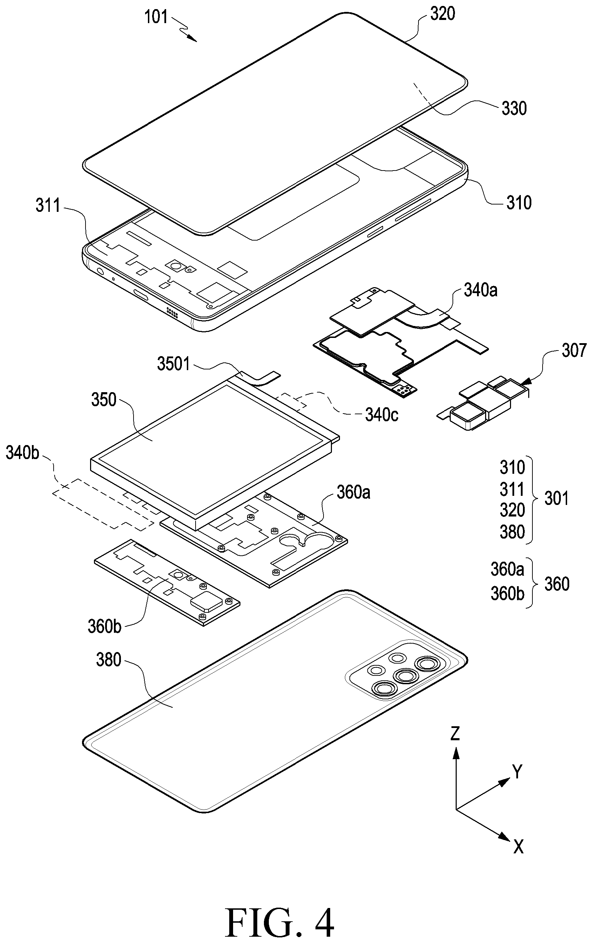

The embodiments of FIGS. 2 to 3 may be combined with the embodiment of FIG. 1 or the embodiments of FIGS. 4 to 11.

Referring to FIGS. 2 and 3, according to an embodiment, an electronic device 101 (e.g., the electronic device 101 of FIG. 1) may include a housing 210 including a first surface (or front surface) 210A, a second surface (or rear surface) 210B, and a side surface 210C surrounding a space between the first surface 210A and the second surface 210B. In an embodiment (not illustrated), the housing 210 may refer to a structure forming a portion of the first surface 210A of FIG. 2, the second surface 210B of FIG. 3, and the side surfaces 210C. According to an embodiment, the first surface 210A may be formed by a front plate 202 (e.g., a glass plate including various coating layers, or a polymer plate) that is at least partially substantially transparent. The second surface 210B may be formed by a rear plate 211 that is substantially opaque. The rear plate 211 may be formed of, e.g., laminated or colored glass, ceramic, polymer, metal (e.g., aluminum, stainless steel (STS), or magnesium), or a combination of at least two thereof. The side surface 210C may be formed by a side structure (or "side bezel structure") 218 that couples to the front plate 202 and the rear plate 211 and includes a metal and/or polymer. In an embodiment, the rear plate 211 and the side structure 218 may be integrally formed together and include the same material (e.g., a metal, such as aluminum).

Although not shown, the front plate 202 may include area(s) that bend from at least a portion of an edge toward the rear plate 211 and seamlessly extend. In an embodiment, only one of the areas of the front plate 202 (or the rear plate 211), which bend to the rear plate 211 (or front plate 202) and extend may be included in one edge of the first surface 210A. According to an embodiment, the front plate 202 or the rear plate 211 may have a substantially flat plate shape. For example, no bent and extended area may be included. When an area bending and extending is included, the thickness of the electronic device 101 at the portion including the area bending and extending may be smaller than the thickness of the rest.

According to an embodiment, the electronic device 101 may include at least one or more of a display 220, audio modules 203, 207, and 214, sensor modules 204 and 219, camera modules 205, 212, and 213, key input devices 217, a light emitting device 206, and connector holes 208 and 209. In an embodiment, the electronic device 101 may exclude at least one (e.g., the key input device 217 or the light emitting device 206) of the components or may add other components.

The display 220 may be visually exposed through a substantial portion of the front plate 202, for example. In an embodiment, at least a portion of the display 220 may be visually exposed through the front plate 202 forming the first surface 210A or through a portion of the side surface 210C. In an embodiment, an edge of the display 220 may be formed to be generally the same as an adjacent outer shape of the front plate 202. In an embodiment (not illustrated), the interval between the outer edge of the display 220 and the outer edge of the front plate 202 may remain substantially even to give a larger area of visual exposure of the display 220.

In an embodiment (not shown), the screen display area of the display 220 may have a recess or opening in a portion thereof, and at least one or more of the audio module 214, sensor module 204, camera module 205, and light emitting device 206 may be aligned with the recess or opening. In an embodiment (not shown), at least one or more of the audio module 214, sensor module 204, camera module 205, fingerprint sensor (not shown), and light emitting device 206 may be included on the rear surface of the screen display area of the display 220. In an embodiment (not illustrated), the display 220 may be disposed to be coupled with, or adjacent, a touch detecting circuit, a pressure sensor capable of measuring the strength (pressure) of touches, and/or a digitizer for detecting a magnetic field-type stylus pen. In an embodiment, at least part of the sensor modules 204 and 219 and/or at least part of the key input devices 217 may be disposed in the first regions 210D and/or the second regions 210E.

The audio modules 203, 207, and 214 may include a microphone hole 203 and speaker holes 207 and 214. A microphone for acquiring external sounds may be disposed in the microphone hole 203. In an embodiment, a plurality of microphones may be disposed to detect the direction of the sound. The speaker holes 207 and 214 may include an external speaker hole 207 and a phone receiver hole 214. In an embodiment, the speaker holes 207 and 214 and the microphone hole 203 may be implemented as a single hole, or speakers may rest without the speaker holes 207 and 214 (e.g., piezo speakers).

The sensor modules 204 and 219 may generate an electrical signal or data value corresponding to an internal operating state or external environmental state of the electronic device 101. For example, the sensor modules 204 and 219 may include a first sensor module 204 (e.g., a proximity sensor) and/or a second sensor module (not shown) (e.g., a fingerprint sensor), which is disposed on the first surface 210A of the housing 210, and/or a third sensor module 219 and/or a fourth sensor module (e.g., a fingerprint sensor) disposed on the second surface 210B of the housing 210. The fingerprint sensor may be disposed on the second surface 210B or side surface 210C as well as the first surface 210A (e.g., the display 220) of the housing 210. The electronic device 101 may further include, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 205, 212, and 213 may include a first camera device 205 disposed on the first surface 210A of the electronic device 101, and a second camera device 212 and/or a flash 213 disposed on the second surface 210B. The camera devices 205 and 212 may include one or more lenses, an image sensor, and/or an image signal processor. The flash 213 may include, e.g., a light emitting diode (LED) or a xenon lamp. In an embodiment, two or more lenses (an infrared camera, a wide-angle lens, and a telephoto lens) and image sensors may be disposed on one surface of the electronic device 101. In an embodiment, flash 213 may emit infrared light. The infrared light emitted by the flash 213 and reflected by the subject may be received through the third sensor module 219. The electronic device 101 or the processor of the electronic device 101 may detect depth information about the subject based on the time point when the infrared light is received from the third sensor module 219.

The key input device 217 may be disposed on the side surface 210C of the housing 210. In an embodiment, the electronic device 101 may exclude all or some of the above-mentioned key input devices 217 and the excluded key input devices 217 may be implemented in other forms, e.g., as soft keys, on the display 220. In an embodiment, the key input device may include the sensor module disposed on the second surface 210B of the housing 210.

The light emitting device 206 may be disposed on, e.g., the first surface 210A of the housing 210. The light emitting device 206 may provide, e.g., information about the state of the electronic device 101 in the form of light. In an embodiment, the light emitting device 206 may provide a light source that interacts with, e.g., the camera module 205. The light emitting device 206 may include, e.g., a light emitting diode (LED), an infrared (IR) LED, or a xenon lamp.

The connector holes 208 and 209 may include a first connector hole 208 for receiving a connector (e.g., a universal serial bus (USB) connector) for transmitting or receiving power and/or data to/from an external electronic device and/or a second connector hole 209 (e.g., an earphone jack) for receiving a connector for transmitting or receiving audio signals to/from the external electronic device.
FIG. 4 is a front exploded perspective view illustrating an electronic device according to an embodiment of the disclosure;

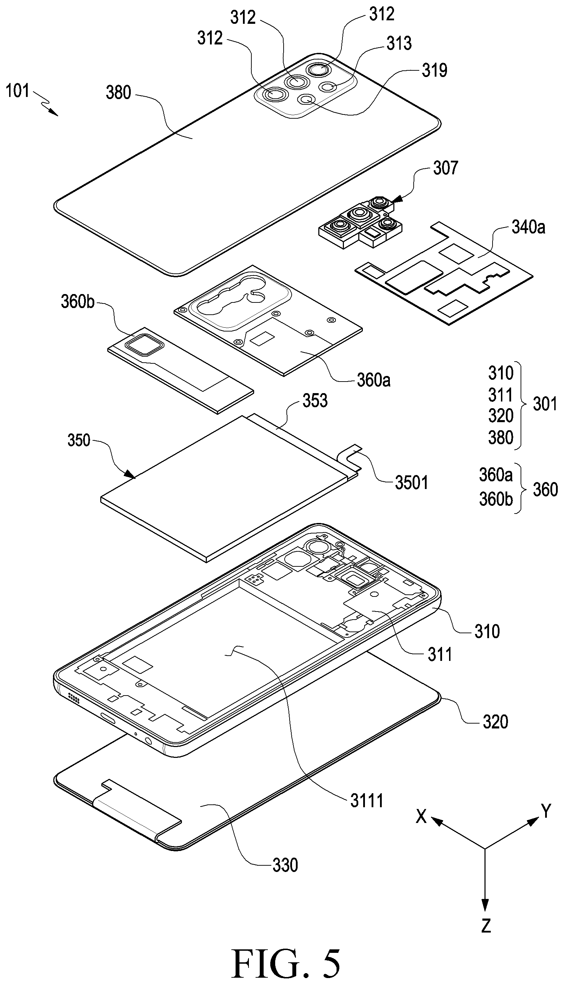

FIG. 5 is a rear exploded perspective view illustrating an electronic device according to an embodiment of the disclosure;

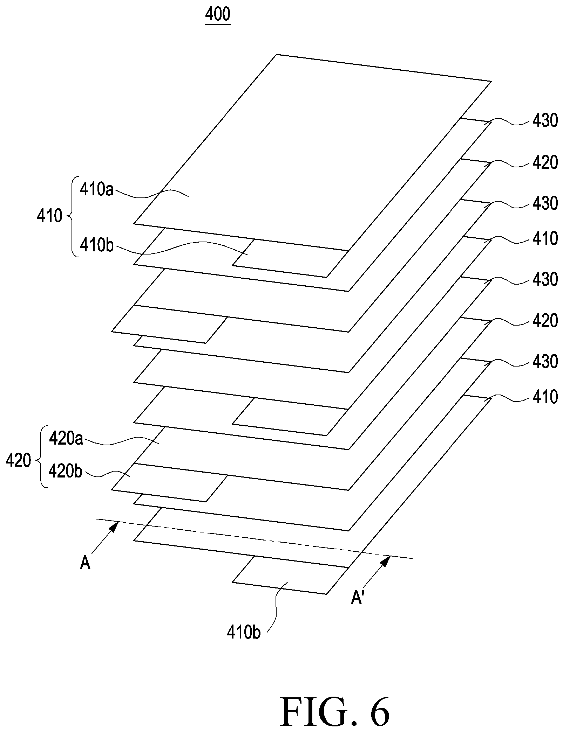

The embodiments of FIGS. 4 to 5 may be combinable with the embodiments of FIGS. 1 to 3 or the embodiments of FIGS. 6 to 15B.

Referring to FIGS. 4 and 5, an electronic device 101 (e.g., the electronic device 101 of FIG. 1 or FIG. 2) may include a side structure 310, a first supporting member 311 (e.g., a bracket), a front plate 320 (e.g., the front plate 202 of FIG. 1), a display 330 (e.g., the display 220 of FIG. 1), at least one printed circuit board (or a board assembly) 340a or 340b, a battery 350, a second supporting member 360 (e.g., a rear case), an antenna, a camera assembly 307, and a rear plate 380 (e.g., the rear plate 211 of FIG. 2). When the plurality of printed circuit boards 340a and 340b are included, the electronic device 101 may include at least one flexible printed circuit board 340c to electrically connect different printed circuit boards. For example, the printed circuit boards 340a and 340b may include a first circuit board 340a disposed above the battery 350 (e.g., in the +Y-axis direction) and a second circuit board 340b disposed under the battery 350 (e.g., in the -Y-axis direction), and the flexible circuit board 340c may electrically connect the first circuit board 340a and the second circuit board 340b.

According to an embodiment, the electronic device 101 may exclude at least one (e.g., the first supporting member 311 or the second supporting member 360) of the components or may add other components. At least one of the components of the electronic device 101 may be the same or similar to at least one of the components of the electronic device 101 of FIG. 1 or 2 and no duplicate description is made below.

At least a portion of the first supporting member 311 may be provided in a flat plate shape. In an embodiment, the first supporting member 311 may be disposed inside the electronic device 101 to be connected with the side structure 310 or integrated with the side structure 310. The first supporting member 311 may be formed of, e.g., a metallic material and/or non-metallic material (e.g., polymer). When the first supporting member 311 is at least partially formed of a metallic material, a portion of the side structure 310 or the first supporting member 311 may function as an antenna. The display 330 may be joined onto one surface of the first supporting member 311, and the printed circuit boards 340a and 340b may be joined onto the opposite surface of the first supporting member 311. A processor (e.g., the processor 120 of FIG. 1), memory (e.g., the memory 130 of FIG. 1), and/or an interface (e.g., the interface 177 of FIG. 1) may be mounted on the printed circuit board 340a, 340b. The processor may include one or more of, e.g., a central processing unit, an application processor, a graphic processing device, an image signal processor, a sensor hub processor, or a communication processor.

According to an embodiment, the housing 301 may include a first supporting member 311 and a side structure 310. According to an embodiment, the housing 301 may be understood as a structure for receiving, protecting, or disposing the printed circuit boards 340a and 340b or the battery 350. In an embodiment, the housing 301 may be understood as including a structure that the user may visually or tactilely recognize from the outside of the electronic device 101, e.g., the side structure 310, the front plate 320, and/or the rear plate 380. For example, the housing 301 may include structures (e.g., the side structure 310, the front plate 320, and the rear plate 380) forming the appearance of the electronic device 101. The housing 301 may be identical to the housing 210 described in connection with FIGS. 2 and 3. In an embodiment, the 'front or rear surface of the housing 301' may refer to the first surface 210A of FIG. 1 or the second surface 210B of FIG. 2. In an embodiment, the first supporting member 311 may be disposed between the front plate 320 (e.g., the first surface 210A of FIG. 1) and the rear plate 380 (e.g., the second surface 210B of FIG. 2) and may function as a structure for placing an electrical/electronic component, such as the printed circuit boards 340a and 340b or the camera assembly 307.

The memory may include, e.g., a volatile or non-volatile memory.

The interface may include, e.g., a high definition multimedia interface (HDMI), a universal serial bus (USB) interface, a secure digital (SD) card interface, and/or an audio interface. The interface may, e.g., electrically or physically connect the electronic device 101 to an external electronic device, and may include a USB connector, an SD card/MMC connector, or an audio connector.

The second supporting member 360 may include, e.g., an upper supporting member 360a or a lower supporting member 360b. In an embodiment, the upper supporting member 360a, together with a portion of the first supporting member 311, may be disposed to surround the printed circuit boards 340a and 340b (e.g., the first circuit board 340a). For example, the upper supporting member 360a of the second supporting member 360 may be disposed to face the first supporting member 311 with the first circuit board 340a interposed therebetween. In an embodiment, the lower supporting member 360b of the second supporting member 360 may be disposed to face the first supporting member 311 with the second circuit board 340b interposed therebetween. A circuit device (e.g., a processor, a communication module, or memory) implemented in the form of an integrated circuit chip or various electrical/electronic components may be disposed on the printed circuit boards 340a and 340b. According to an embodiment, the printed circuit boards 340a and 340b may receive an electromagnetic shielding environment from the second supporting member 360. In an embodiment, the lower supporting member 360b may be utilized as a structure in which electrical/electronic components, such as a speaker module, or an interface (e.g., a USB connector, an SD card/MMC connector, or an audio connector) may be disposed. In an embodiment, electrical/electronic components, such as a speaker module, or an interface (e.g., a USB connector, an SD card/MMC connector, or an audio connector) may be disposed on an additional printed circuit board (not shown). For example, the lower supporting member 360b, together with the other part of the first supporting member 311, may be disposed to surround the additional printed circuit board (e.g., the second printed circuit board 340b). The speaker module or interface disposed on the additional printed circuit board (not shown) or the lower supporting member 360b may be disposed corresponding to the audio module 207 or connector holes 208 and 309 of FIG. 2.

The battery 350 may be a device for supplying power to at least one component of the electronic device 101. The battery 450 may include, e.g., a primary cell which is not rechargeable, a secondary cell which is rechargeable, or a fuel cell. At least a portion of the battery 350 may be disposed on substantially the same plane as the printed circuit boards 340a and 340b. The battery 350 may be integrally disposed inside the electronic device 101 or may be detachably disposed with the electronic device 101.

Although not shown, the antenna may include a conductor pattern implemented on the surface of the second supporting member 360 through, e.g., laser direct structuring. In an embodiment, the antenna may include a printed circuit pattern formed on the surface of the thin film. The thin film-type antenna may be disposed between the rear plate 380 and the battery 350. The antenna may include, e.g., a near-field communication (NFC) antenna, a wireless charging antenna, and/or a magnetic secure transmission (MST) antenna. The antenna may perform short-range communication with, e.g., an external device or may wirelessly transmit or receive power necessary for charging. In an embodiment of the present invention, another antenna structure may be formed by a portion or combination of the side structure 310 and/or the first supporting member 311.

According to an embodiment, the camera assembly 307 may include at least one camera module. Inside the electronic device 101, the camera assembly 307 (or at least one camera module) may receive at least a portion of the light incident through the optical hole or camera windows. In an embodiment, the camera assembly 307 may be disposed on the first supporting member 311 in a position adjacent to the printed circuit boards 340a and 340b. In an embodiment, the camera module(s) of the camera assembly 307 may be generally aligned with either one of the camera windows and be a least partially surrounded by the second supporting member 360 (e.g., the upper supporting member 360a).

According to an embodiment, the first supporting member 311 may be referred to as a "supporting member." The supporting member 311 may include a seating portion 3111. The seating portion 3111 may include a recess recessed from one surface of the supporting member 311. For example, the battery 350 may be disposed on the seating portion 3111. The seating portion 3111 may be a portion of the supporting member 311 providing a space in which the battery 350 is disposed. The seating portion 3111 may have a groove shape recessed from one surface of the supporting member 311.

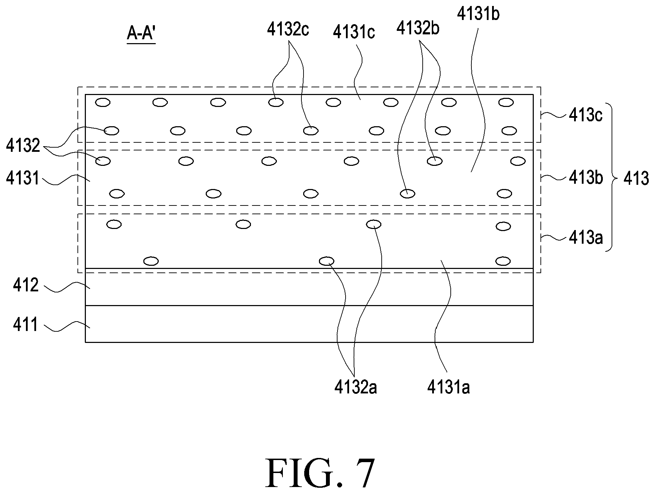

FIG. 6 is a view illustrating an exploded portion of a battery 400 according to an embodiment of the disclosure. FIG. 6 may be a portion of an exploded view illustrating a battery cell included in the battery 400. The components described with reference to FIG. 6 may be identical in whole or portion to the components described with reference to FIGS. 1 to 5. The components described with reference to FIG. 6 may be identical in whole or portion to the components described with reference to FIGS. 7 to 10.

According to an embodiment, the battery 400 may include a first electrode 410. The first electrode 410 may be plate-shaped. The first electrode 410 may be an anode. The first electrode 410 may be referred to as a "first electrode plate," "anode," or "anode plate."

According to an embodiment, the first electrode 410 may include a first electrode plate portion 410a and a first tab portion 410b. The first tab portion 410b may extend outward from the first electrode plate portion 410a. The first electrode plate portion 410a may include an active material. The first tab portion 410b may be a portion extending from the first electrode plate portion 410a including the active material. The first electrode plate portion 410a may include a current collection layer 411 illustrated in FIG. 7. The first electrode plate portion 410a may include a buffer layer 412 illustrated in FIG. 7. The first electrode plate portion 410a may include an electrode layer 413 illustrated in FIG. 7. The first electrode plate portion 410a may be referred to as an "active material layer." The first tab portion 410b may include a portion of the current collection layer 411 extending from the first electrode plate portion 410a illustrated in FIG. 7.

According to an embodiment, the battery 400 may include a second electrode 420. The second electrode 420 may be plate-shaped. The second electrode 420 may be a cathode. The second electrode 420 may be referred to as a "second electrode plate," "cathode," or "cathode plate." The second electrode plate portion 420a may include an active material. The second tab portion 420b may be a portion extending from the second electrode plate portion 420a including the active material. The second tab portion 420b may include a portion of a current collection layer extending from the second electrode plate portion 420a illustrated in FIG. 7.

According to an embodiment, the second electrode 420 may include a second electrode plate portion 420a and a second tab portion 420b. The second tab portion 420b may extend outward from the second electrode plate portion 420a.

According to an embodiment, the battery 400 may include a separator 430. The separator 430 may be disposed between the first electrode 410 and the second electrode 420. The first electrode 410 and the second electrode 420 may be spaced apart from each other, and the separator 430 may be disposed between the first electrode 410 and the second electrode 420 spaced apart from each other.

According to an embodiment, the first electrode 410 may include a plurality of first electrodes 410. The second electrode 420 may include a plurality of second electrodes 420. The plurality of first electrodes 410 and the plurality of second electrodes 420 may be alternately disposed with each other. The separator 430 may include a plurality of separators 430. Each of the plurality of separators 430 may be disposed between the first electrode 410 and the second electrode 420.

According to an embodiment, the content regarding the first electrode 410 described with reference to FIGS. 7 to 10 may be equally applied to the second electrode 420. For example, similar to the first electrode 410, the second electrode 420 may also include a current collection layer (e.g., 411 of FIG. 7), a buffer layer (e.g., 412 of FIG. 7), and an electrode layer (e.g., 413 of FIG. 7). For example, similar to the first electrode 410, the second electrode 420 may also include a buffer layer (e.g., 412 of FIG. 7) including a binder and a conductive carbon. For example, similar to the first electrode 410, the second electrode 420 may also include an electrode layer (e.g., 413 of FIG. 7) including the first, second, and third portions (e.g., 413a, 413b, and 413c of FIG. 7) having different pore densities.

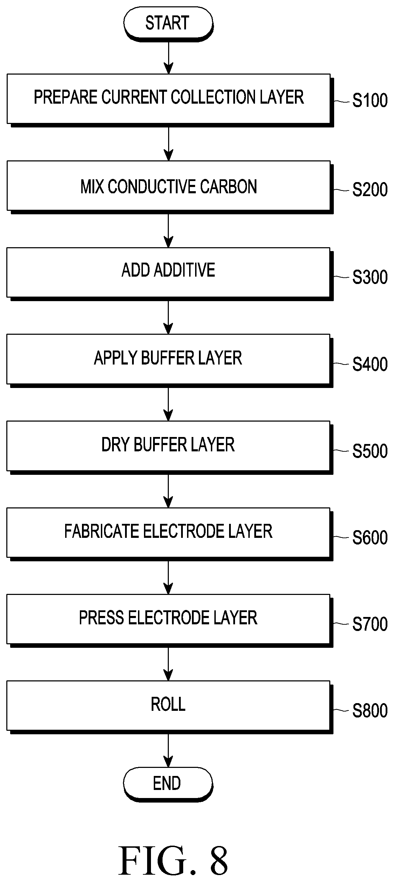

FIG. 7 is a cross-sectional view illustrating the first electrode 410 taken along the reference line A-A' illustrated in FIG. 6. The components described with reference to FIG. 7 may be identical in whole or portion to the components described with reference to FIGS. 1 to 6. The components described with reference to FIG. 7 may be identical in whole or portion to the components described with reference to FIGS. 8 to 10. According to an embodiment, the first electrode 410 illustrated in FIG. 6 may be a cross-section illustrating the buffer layer 412 and the electrode layer 413 on at least one surface of the current collection layer 411. The first electrode 410 may include the buffer layer 412 and the electrode layer 413 disposed on each of two opposite surfaces of the current collection layer 411.

According to an embodiment, the first electrode 410 (e.g., the first electrode 410 of FIG. 6) may include a current collection layer 411. The first electrode 410 may include a buffer layer 412. The first electrode 410 may include an electrode layer 413. The buffer layer 412 and the electrode layer 413 may be stacked on a first surface of the current collection layer 411. The first electrode (e.g., the first electrode 410 of FIG. 6) according to an embodiment of the disclosure may include the buffer layer 412 and the electrode layer 413 stacked on each of a first surface of the current collection layer 411 and a second surface opposite to the first surface. For example, the first electrode 410 according to an embodiment of the disclosure may include a first buffer layer and a first electrode layer stacked on the first surface of the current collection layer 411, and may include a second buffer layer and a second electrode layer stacked on the second surface opposite to the first surface.

According to an embodiment, the first electrode 410 may include the current collection layer 411. The current collection layer 411 may include a metallic material. The current collection layer 411 may include copper (Cu). The current collection layer 411 may be referred to as a "base layer."

According to an embodiment, the first electrode 410 may include the buffer layer 412. The buffer layer 412 may be stacked on the current collection layer 411. The buffer layer 412 may be applied on the current collection layer 411. The buffer layer 412 may include a layer including a carbon-based material including a binder. The buffer layer 412 may include a binder and a carbon-based material. The buffer layer 412 may include a conductive carbon. The buffer layer 412 may include a binder. The binder may be a material having an elastic modulus. The buffer layer 412 may include a mixture of the conductive carbon and the binder. The elastic modulus of the buffer layer 412 may vary according to a ratio of the conductive carbon to the binder, a type of the binder, and/or an additional additive. For example, the elastic modulus of the buffer layer 412 may increase as a ratio of the binder to the conductive carbon increases. For example, the elastic modulus of the buffer layer 412 may vary according to a type of the binder (e.g., PVDF, CMC, or PAA). For example, the elastic modulus of the buffer layer 412 may vary according to an additive (e.g., NMP) added to the mixture of the conductive carbon and the binder. Depending on the elastic modulus of the buffer layer 412, a ratio of the pore 4132a, 4132b, or 4132c occupying the total area in each of the first portion 413a, the second portion 413b, or the third portion 413c may vary. The buffer layer 412 may be disposed between the current collection layer 411 and the electrode layer 413. The buffer layer 412 may be referred to as a "coating layer," "interlayer," or "adhesive layer." The thickness of the buffer layer 412 may be in a range of 5 µm to 20 µm.

According to an embodiment, the first electrode 410 may include the electrode layer 413. The electrode layer 413 may be stacked on the buffer layer 412. The electrode layer 413 may face the separator (e.g., 430 of FIG. 6). The separator 430 may be disposed between the second electrode 420 and the electrode layer 413. The electrode layer 413 may include an active material. The electrode layer 413 may include an electrode region 4131 and a pore 4132. The pore 4132 may be open in the electrode region 4131. The plurality of pores 4132 may be formed. The plurality of pores 4132 may be spaced apart from each other. The electrode layer 413 may be referred to as an "active material layer."

According to an embodiment, the electrode layer 413 may include a first portion 413a, a second portion 413b, and a third portion 413c. At least one of the first portion 413a, the second portion 413b, or the third portion 413c may be integrally formed. For example, the first portion 413a and the second portion 413b may be integrally formed. For example, the second portion 413b and the third portion 413c may be integrally formed. For example, the first, second, and third portions 413a, 413b, and 413c may be integrally formed. The first portion 413a, the second portion 413b, and the third portion 413c are arbitrarily divided to compare and describe a distribution (density) of the pore, and the electrode layer 413 according to an embodiment of the disclosure may be divided into a plurality of portions having different numbers. The electrode layer 413 may include a plurality of portions having different pore densities. The pore density may be defined as a number of pores 4132 included in a unit volume. A first pore density in the first portion 413a may be different from a second pore density in the second portion 413b. The second pore density in the second portion 413b may be different from a third pore density in the third portion 413c. The first pore density in the first portion 413a may be different from the third pore density in the third portion 413c.

The first electrode (e.g., the first electrode 410 of FIG. 6) according to an embodiment of the disclosure may enhance efficiency for quick charging by forming different pore densities in each of the first, second, and third portions 413a, 413b, and 413c. For example, the first electrode 410 according to an embodiment of the disclosure may reduce a chemical side reaction of a battery (e.g., a lithium-ion battery) occurring at the surface of the electrode 410 by forming the pore density of the third portion 413c, which is located closer to the second electrode 420 than the first portion 413a, to be greater. For example, the first electrode 410 according to an embodiment of the disclosure may increase the size of an active material region participating in a charging reaction in the first portion 413a by forming the pore density of the first portion 413a, which is located farther from the second electrode 420 than the third portion 413c, to be smaller. The first electrode 410 according to an embodiment of the disclosure may reduce a chemical side reaction by increasing the pore density in a portion adjacent to the second electrode 420 (e.g., the third portion 413c), and may increase a region participating in a charging reaction by increasing the active material region in a portion far from the second electrode 420 (e.g., the first portion 413a).

According to an embodiment, the pore density of the electrode layer 413 may increase as a distance from the buffer layer 412 increases. The pore density of the electrode layer 413 may decrease as it is closer to the buffer layer 412. The first portion 413a may be located closer to the buffer layer 412 than the second portion 413b. The first portion 413a may be located closer to the buffer layer 412 than the third portion 413c. The second portion 413b may be located closer to the buffer layer 412 than the third portion 413c. The second portion 413b may be located between the first portion 413a and the third portion 413c. The first pore density of the first portion 413a may be smaller than the second pore density of the second portion 413b. The first pore density of the first portion 413a may be smaller than the third pore density of the third portion 413c. The second pore density of the second portion 413b may be smaller than the third pore density of the third portion 413c.

According to an embodiment, the first portion 413a may include a first electrode region 4131a and a first pore 4132a. The first pore 4132a may be open in the first electrode region 4131a, and a plurality of first pores 4132a may be spaced apart from each other. The electrode region 4131 may include the first electrode region 4131a. The pore 4132 may include the first pore 4132a.

According to an embodiment, the second portion 413b may include a second electrode region 4131b and a second pore 4132b. The second pore 4132b may be open in the second electrode region 4131b, and a plurality of second pores 4132b may be spaced apart from each other. The electrode region 4131 may include the second electrode region 4131b. The pore 4132 may include the second pore 4132b.

According to an embodiment, the third portion 413c may include a third electrode region 4131c and a third pore 4132c. The third pore 4132c may be open in the third electrode region 4131c, and a plurality of third pores 4132c may be spaced apart from each other. The electrode region 4131 may include the third electrode region 4131c. The pore 4132 may include the third pore 4132c.

According to an embodiment, a number of the first pores 4132a may be smaller than a number of the second pores 4132b. The number of the first pores 4132a may be smaller than a number of the third pores 4132c. The number of the second pores 4132b may be smaller than the number of the third pores 4132c. The number of the first pores 4132a of the first electrode (e.g., the first electrode 410 of FIG. 6) according to an embodiment of the disclosure may be identical to the number of the second pores 4132b. The number of the second pores 4132b of the first electrode (e.g., the first electrode 410 of FIG. 6) according to an embodiment of the disclosure may be identical to the number of the third pores 4132c. At least one of the numbers of the first, second, and third pores 4132a, 4132b, and 4132c of the first electrode 410 according to an embodiment of the disclosure may be identical to each other. At least one of the numbers of the first, second, and third pores 4132a, 4132b, and 4132c of the first electrode 410 according to an embodiment of the disclosure may be different from a number of another pore.

According to an embodiment, a porosity of an upper portion 413c, a middle portion 413b, or a lower portion 413a of the electrode layer 413 may be controlled according to the elastic modulus of the buffer layer 412. For example, a distribution state (e.g., the first pore density) of the first pore 4132a of the first portion 413a of the electrode layer 413 may be determined based on the elastic modulus of the buffer layer 412. For example, a distribution state (e.g., the second pore density) of the second pore 4132b of the second portion 413b of the electrode layer 413 may be determined based on the elastic modulus of the buffer layer 412. For example, a distribution state (e.g., the third pore density) of the third pore 4132c of the third portion 413c of the electrode layer 413 may be determined based on the elastic modulus of the buffer layer 412.

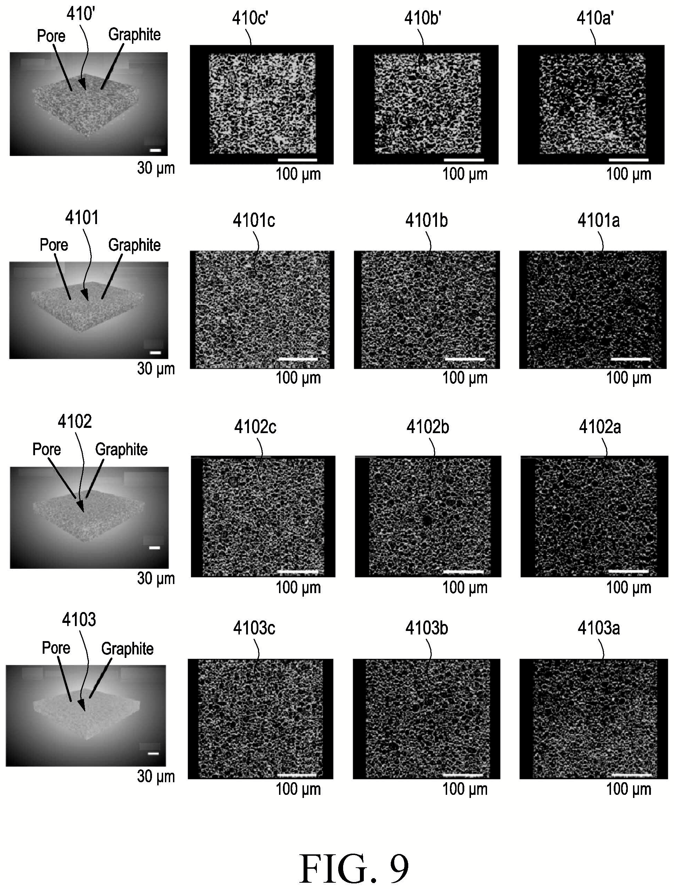

FIG. 8 is a block diagram illustrating a manufacturing method of the battery 400 according to an embodiment of the disclosure. The components described with reference to FIG. 8 may be identical in whole or portion to the components described with reference to FIGS. 1 to 7. The components described with reference to FIG. 8 may be identical in whole or portion to the components described with reference to FIGS. 9 to 10.

According to an embodiment, the manufacturing method of the battery 400 according to an embodiment of the disclosure may include a first process S100, a second process S200, a third process S300, a fourth process S400, a fifth process S500, a sixth process S600, a seventh process S700, and an eighth process S800. The order in which the first to eighth processes S100, S200, S300, S400, S500, S600, S700, and S800 are performed is not limited to the above-described example (e.g., the ordinal symbols attached to the processes), and the order may be changed, or at least one process may be omitted, or one process may be performed including another process. The battery 400 according to an embodiment of the disclosure may be manufactured by a dry process.

According to an embodiment, the manufacturing method of the battery 400 may include the first process S100 of preparing a current collection layer (e.g., the current collection layer 411 of FIG. 7). The current collection layer 411 may include a copper (Cu) material.

According to an embodiment, the manufacturing method of the battery 400 may include the second process S200 of mixing a conductive carbon. In the second process S200, the conductive carbon may be mixed with a binder. The binder may include a material having an elastic modulus. The binder may include polyvinylidene fluoride (PVDF). The binder may include carboxy methyl cellulose (CMC). The CMC of the binder may be dissolved in deionization water (DI water) for use. The binder may include polyacrylic acid (PAA). The PAA of the binder may be dissolved in deionization water (DI water) for use. The elastic modulus of the binder may be in a range of 1.62 MPa to 7.95 MPa. In the mixture generated in the second process S200, the conductive carbon may have a higher ratio than the binder. In the second process S200, the conductive carbon and the binder may be mixed at a first ratio. The first ratio may be 9:1. The mixture in which the conductive carbon and the binder are mixed may be referred to as a "first mixture."

According to an embodiment, the manufacturing method of the battery 400 may include the third process S300 of adding an additive. In the third process S300, the additive may be added to the first mixture in which the conductive carbon and the binder are mixed. The additive may include N-methyl-2-pyrrolidone (NMP). When the additive is added to the first mixture in the third process S300, a composition in a slurry state may be generated. The mixture in a state in which the additive is added to the first mixture may be referred to as a "second mixture." When the additive is added to the first mixture according to an embodiment of the disclosure, the elastic modulus of the first mixture may be adjusted. When the elastic modulus of the first mixture is adjusted according to an embodiment of the disclosure, the pore density in each portion (e.g., the first to third portions 413a, 413b, and 413c) of the electrode layer (e.g., the electrode layer 413 of FIG. 7) may vary.

According to an embodiment, the manufacturing method of the battery 400 may include the fourth process S400 of applying a buffer layer (e.g., the buffer layer 412 of FIG. 7). In the fourth process S400, the buffer layer 412 may be applied on a current collection layer (e.g., the current collection layer 411 of FIG. 7). The composition in which the conductive carbon, the binder, and the additive are mixed, generated in the third process S300, may be coated on the current collection layer 411 to form the buffer layer 412.

According to an embodiment, the manufacturing method of the battery 400 may include the fifth process S500 of drying a buffer layer (e.g., the buffer layer 412 of FIG. 7). In the fifth process S500, the second mixture in the slurry state may be dried in a state of being applied on a current collection layer (e.g., the current collection layer 411 of FIG. 7). The fifth process S500 may include a process of vacuum drying for about 2 hours at a temperature condition of about 200 degrees Celsius. After the fifth process S500 is performed, the buffer layer 412 may be coated on the current collection layer 411.

According to an embodiment, the manufacturing method of the battery 400 may include the sixth process S600 of fabricating an electrode layer (e.g., the electrode layer 413 of FIG. 7). The electrode layer 413 may include graphite powder and polytetrafluoroethylene (PTFE). PTFE may have an elastic modulus. PTFE may be referred to as a "second binder." The battery 400 according to an embodiment of the disclosure may include the buffer layer 412 including a first binder (e.g., at least one of PVDF, CMC, or PAA) and the electrode layer 413 including the second binder (e.g., PTFE). The electrode layer 413 may include a mixture of the graphite powder and PTFE. The mixture of the graphite powder and PTFE may be referred to as a "third mixture." In the sixth process S600, the graphite powder and PTFE may be mixed. The graphite powder and PTFE may be mixed at a second ratio. The second ratio may be 98:2.

According to an embodiment, the manufacturing method of the battery 400 may include the seventh process S700 of pressing an electrode layer (e.g., the electrode layer 413 of FIG. 7). The third mixture in which the graphite powder and PTFE are mixed may be applied on a buffer layer (e.g., the buffer layer 412 of FIG. 7). The third mixture applied on the buffer layer 412 may be fibrillated by a shearing process. The battery 400 according to an embodiment of the disclosure may fabricate the electrode layer 413 in a thin film form by fibrillating the third mixture through the shearing process.

According to an embodiment, the manufacturing method of the battery 400 may include the eighth process S800 of rolling an electrode layer (e.g., the electrode layer 413 of FIG. 7). In the eighth process S800, a rolling process may be performed on the third mixture stacked on a buffer layer (e.g., the buffer layer 412 of FIG. 7). According to an embodiment, the rolling process may be performed a plurality of times for a microstructure change of a dry electrode. According to an embodiment, a state of force applied to the electrode in the rolling process may be determined, and the rolling process may be performed a plurality of times reflecting the state of force. For example, in each of the plurality of rolling processes, the state of force applied to the electrode may be differently determined, and each of the plurality of rolling processes may be performed reflecting the determined state of force.

By the manufacturing method of the battery 400 according to an embodiment of the disclosure, a quick charging performance of the battery 400 may be enhanced. For example, when the pore density increases in a region adjacent to a surface of the electrode (e.g., the third portion 413c of FIG. 7), impregnation of an electrolyte may be facilitated, and accordingly, ingress and egress of lithium (Li) ion may be facilitated. For example, when the ingress and egress of lithium (Li) ion is facilitated, the reaction may be uniformly performed in the entire region of the electrode layer 413 due to the lithium (Li) ion being uniformly impregnated into the first to third portions 413a, 413b, and 413c of the electrode layer (e.g., the electrode layer 413 of FIG. 7). For example, when the reaction is uniformly performed in the entire region of the electrode layer 413, a quick charging capacity of the battery 400 may be increased, and a phenomenon in which degradation of the electrode or a lifespan of the battery 400 is decreased may be decreased. By the manufacturing method of the battery 400 according to an embodiment of the disclosure, since a volume occupied by an electrode region (e.g., the electrode region 4131 of FIG. 7) in the first portion (e.g., the first portion 413a of FIG. 7) and the second portion (e.g., the second portion 413b of FIG. 7) is relatively greater compared to the third portion (e.g., the third portion 413c of FIG. 7), a content of an active material may be increased in the first and second portions 413a and 413b compared to the third portion 413c. Due to the increase in the content of the active material, a metal charging capacity may be increased.

By the manufacturing method of the battery 400 according to an embodiment of the disclosure, a process efficiency of the battery 400 may be enhanced. For example, due to a plurality of rolling processes being performed after application of the electrode layer 413, adjustment of the pore density in each portion (e.g., the first to third portions 413a, 413b, and 413c) of the electrode layer 413 may be facilitated. For example, due to the plurality of rolling processes being performed after application of the electrode layer 413, a change in the pore density may be uniformly achieved across the entire thickness of the electrode layer 413.

FIG. 9 is a diagram illustrating high-resolution three-dimensional X-ray microscopy (XRM) analysis results of the first electrode 4101, 4102, 4103 according to an embodiment of the disclosure. The buffer layer (e.g., the buffer layer 412 of FIG. 7) of the first electrode 4101 illustrated in FIG. 9 may include a binder including polyvinylidene fluoride (PVDF). The buffer layer (e.g., the buffer layer 412 of FIG. 7) of the first electrode 4102 illustrated in FIG. 9 may include a binder including carboxy methyl cellulose (CMC). The buffer layer (e.g., the buffer layer 412 of FIG. 7) of the first electrode 4103 illustrated in FIG. 9 may include a binder including polyacrylic acid (PAA). The components described with reference to FIG. 9 may be identical in whole or portion to the components described with reference to FIGS. 1 to 8. FIG. 9 includes a result of analyzing a pore distribution in each portion 410a', 410b', 410c' of the first electrode 410' according to a comparative example by three-dimensional X-ray microscopy (XRM). The first electrode 410' according to the comparative example does not include a binder.

According to an embodiment, the first electrode 4101 may include a first portion 4101a corresponding to the first portion 413a illustrated in FIG. 7. The first electrode 4101 may include a second portion 4101b corresponding to the second portion 413b illustrated in FIG. 7. The first electrode 4101 may include a third portion 4101c corresponding to the third portion 413c illustrated in FIG. 7. The description regarding the components (e.g., the first portion 4101a, the second portion 4101b, and the third portion 4101c) described with reference to FIG. 9 may be equally applied to the description regarding the components (e.g., the first portion 413a, the second portion 413b, and the third portion 413c) described with reference to FIG. 7.

According to an embodiment, the first electrode 4102 may include a first portion 4102a corresponding to the first portion 413a illustrated in FIG. 7. The first electrode 4102 may include a second portion 4102b corresponding to the second portion 413b illustrated in FIG. 7. The first electrode 4102 may include a third portion 4102c corresponding to the third portion 413c illustrated in FIG. 7. The description regarding the components (e.g., the first portion 4102a, the second portion 4102b, and the third portion 4102c) described with reference to FIG. 9 may be equally applied to the description regarding the components (e.g., the first portion 413a, the second portion 413b, and the third portion 413c) described with reference to FIG. 7.

According to an embodiment, the first electrode 4103 may include a first portion 4103a corresponding to the first portion 413a illustrated in FIG. 7. The first electrode 4103 may include a second portion 4103b corresponding to the second portion 413b illustrated in FIG. 7. The first electrode 4103 may include a third portion 4103c corresponding to the third portion 413c illustrated in FIG. 7. The description regarding the components (e.g., the first portion 4103a, the second portion 4103b, and the third portion 4103c) described with reference to FIG. 9 may be equally applied to the description regarding the components (e.g., the first portion 413a, the second portion 413b, and the third portion 413c) described with reference to FIG. 7.

Referring to FIG. 9, a density (e.g., the first pore density) of the pore (e.g., the pore 4132 of FIG. 7) in the first portion 4101a, 4102a, 4103a may be 15 to 20%. The first pore density may be defined as a ratio of a volume occupied by the first pore (e.g., the first pore 4132a of FIG. 7) in the first portion (e.g., the first portion 413a of FIG. 7).

Referring to FIG. 9, a density (e.g., the second pore density) of the pore (e.g., the pore 4132 of FIG. 7) in the second portion 4101b, 4102b, 4103b may be 30 to 35%. The second pore density may be defined as a ratio of a volume occupied by the second pore (e.g., the second pore 4132b of FIG. 7) in the second portion (e.g., the second portion 413b of FIG. 7).

Referring to FIG. 9, a density (e.g., the third pore density) of the pore (e.g., the pore 4132 of FIG. 7) in the third portion 4101c, 4102c, 4103c may be 40 to 50%. The third pore density may be defined as a ratio of a volume occupied by the third pore (e.g., the third pore 4132c of FIG. 7) in the third portion (e.g., the third portion 413c of FIG. 7).

Referring to FIG. 9, it may be identified that the density of the pore (e.g., the pore 4132 of FIG. 7) continuously increases from the first portion 4101a, 4102a, 4103a toward the third portion 4101c, 4102c, 4103c.

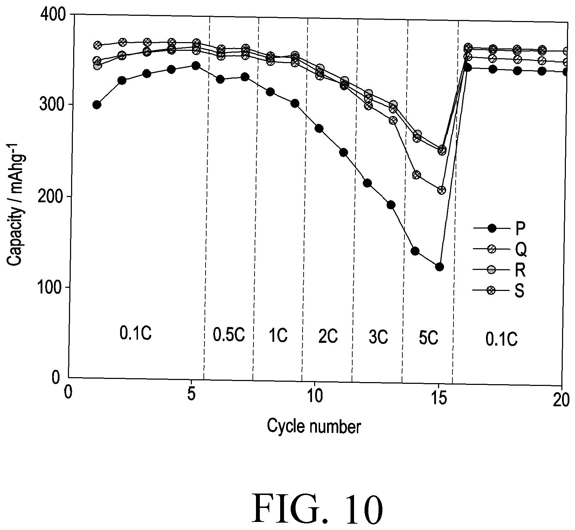

FIG. 10 is a graph comparing a quick charging performance of the battery according to embodiments of the disclosure and a quick charging performance of a battery according to a comparative example. The components described with reference to FIG. 10 may be identical in whole or portion to the components described with reference to FIGS. 1 to 9.

Referring to FIG. 10, a P-line diagram is a view illustrating a quick charging performance of a battery according to a comparative example (e.g., a battery having an anode manufactured by a wet process) according to a cycle number. A Q-line diagram is a view illustrating a quick charging performance of a battery according to an embodiment of the disclosure (e.g., a battery including the first electrode 4101 of FIG. 9) according to the cycle number. An R-line diagram is a view illustrating a quick charging performance of a battery according to an embodiment of the disclosure (e.g., a battery including the first electrode 4102 of FIG. 9) according to the cycle number. An S-line diagram is a view illustrating a quick charging performance of a battery according to an embodiment of the disclosure (e.g., a battery including the first electrode 4103 of FIG. 9) according to the cycle number.

Referring to FIG. 10, it may be identified that the quick charging performance of the battery according to embodiments of the disclosure is higher than the quick charging performance of the battery according to the comparative example. For example, in a cycle number 5C section, it may be identified that a quick charging performance value illustrated in the Q, R, and S-line diagrams is higher than a quick charging performance value illustrated in the P-line diagram.

A battery may include an anode, a cathode, and a separator. The anode may be manufactured by a wet process. An anode manufactured by the wet process may have a pore of uniform density formed throughout the entire electrode. The anode having the pore of uniform density formed therein causes a large side reaction to occur at a surface having relatively low resistance during quick charging. In the anode having the pore of uniform density formed therein, charging may not be properly performed inside the electrode having relatively high resistance due to the side reaction. In the anode having the pore of uniform density formed therein, a load may be concentrated on the surface having relatively low resistance, which may cause degradation of the battery. Due to the degradation of the battery, a lifespan of the battery may be decreased and stability may be decreased.

A problem to be solved in the disclosure may be to provide a battery with enhanced charging performance.

A problem to be solved in the disclosure may be to provide an electrode having a continuously varying pore density.

The problem to be solved in the disclosure is not limited to the above-mentioned problems and may be variously extended without departing from the spirit and scope of the disclosure.

In the electronic device according to various embodiments of the disclosure, the charging performance of the battery may be enhanced due to the density of the pore continuously changing from the surface of the electrode toward the inside.

In the electronic device according to various embodiments of the disclosure, the pore density of the electrode layer may continuously change by disposing the buffer layer in which the binder and the conductive carbon are mixed between the current collection layer and the electrode layer.

The effects obtainable from the disclosure are not limited to the effects mentioned above, and other effects not mentioned is clearly understood by those skilled in the art to which the disclosure belongs from the following description.

The battery (e.g., 400 of FIGS. 1 to 10) according to an embodiment of the present disclosure may include a cathode (e.g., 420 of FIGS. 1 to 10).

The battery (e.g., 400 of FIGS. 1 to 10) according to an embodiment of the present disclosure may include an anode (e.g., 410 of FIGS. 1 to 10) spaced apart from the cathode (e.g., 420 of FIGS. 1 to 10).

The battery (e.g., 400 of FIGS. 1 to 10) according to an embodiment of the present disclosure may include a separator (e.g., 430 of FIGS. 1 to 10) disposed between the cathode (e.g., 420 of FIGS. 1 to 10) and the anode (e.g., 410 of FIGS. 1 to 10).

The anode (e.g., 410 of FIGS. 1 to 10) according to an embodiment of the present disclosure may include a current collection layer (e.g., 411 of FIGS. 1 to 10) including a metallic material.

The anode (e.g., 410 of FIGS. 1 to 10) according to an embodiment of the present disclosure may include an electrode layer (e.g., 413 of FIGS. 1 to 10) spaced apart from the current collection layer (e.g., 411 of FIGS. 1 to 10) and including a plurality of pores (e.g., 4132 of FIGS. 1 to 10).

The anode (e.g., 410 of FIGS. 1 to 10) according to an embodiment of the present disclosure may include a buffer layer (e.g., 412 of FIGS. 1 to 10) disposed between the current collection layer (e.g., 411 of FIGS. 1 to 10) and the electrode layer (e.g., 413 of FIGS. 1 to 10) and including a binder mixed with a conductive carbon.

The binder according to an embodiment of the present disclosure may include a compound having an elastic modulus.

A number of the plurality of pores (e.g., 4132 of FIGS. 1 to 10) according to an embodiment of the present disclosure may vary according to a distance from the buffer layer (e.g., 412 of FIGS. 1 to 10).

The number of the plurality of pores (e.g., 4132 of FIGS. 1 to 10) according to an embodiment of the present disclosure may increase as a distance from the buffer layer (e.g., 412 of FIGS. 1 to 10) increases.

The electrode layer (e.g., 413 of FIGS. 1 to 10) according to an embodiment of the present disclosure may include a first portion (e.g., 413a of FIGS. 1 to 10) coupled to the buffer layer (e.g., 412 of FIGS. 1 to 10) and including a plurality of first pores (e.g., 4132a of FIGS. 1 to 10).

The electrode layer (e.g., 413 of FIGS. 1 to 10) according to an embodiment of the present disclosure may include a second portion (e.g., 413b of FIGS. 1 to 10) stacked on the first portion (e.g., 413a of FIGS. 1 to 10) and including a plurality of second pores (e.g., 4132b of FIGS. 1 to 10) of which a number is greater than a number of the plurality of first pores (e.g., 4132a of FIGS. 1 to 10).

The electrode layer (e.g., 413 of FIGS. 1 to 10) according to an embodiment of the present disclosure may include a third portion (e.g., 413c of FIGS. 1 to 10) stacked on the second portion (e.g., 413b of FIGS. 1 to 10) and including a plurality of third pores (e.g., 4132c of FIGS. 1 to 10) of which a number is greater than a number of the plurality of second pores (e.g., 4132b of FIGS. 1 to 10).

The number of the plurality of pores (e.g., 4132 of FIGS. 1 to 10) according to an embodiment of the present disclosure may increase as it is closer to the separator (e.g., 430 of FIGS. 1 to 10).

The buffer layer (e.g., 412 of FIGS. 1 to 10) according to an embodiment of the present disclosure may include a mixture of the conductive carbon and the binder.

The ratio of the binder in the mixture according to an embodiment of the present disclosure may be 10% or less.

The binder according to an embodiment of the present disclosure may include polyvinylidene fluoride (PVDF).

The binder according to an embodiment of the present disclosure may include carboxy methyl cellulose (CMC).

The binder according to an embodiment of the present disclosure may include polyacrylic acid (PAA).

The buffer layer (e.g., 412 of FIGS. 1 to 10) according to an embodiment of the present disclosure may include an additive added to the mixture of the conductive carbon and the binder.

The additive according to an embodiment of the present disclosure may include N-methyl-2-pyrrolidone (NMP).

The buffer layer (e.g., 412 of FIGS. 1 to 10) according to an embodiment of the present disclosure may be dried after being applied on the current collection layer (e.g., 411 of FIGS. 1 to 10).

The electrode layer (e.g., 413 of FIGS. 1 to 10) according to an embodiment of the present disclosure may include graphite powder and a second binder mixed with the graphite powder and having an elastic modulus.

The second binder according to an embodiment of the present disclosure may include polytetrafluoroethylene (PTFE).

The electrode layer (e.g., 413 of FIGS. 1 to 10) according to an embodiment of the present disclosure may be rolled a plurality of times after being pressed on the buffer layer (e.g., 412 of FIGS. 1 to 10).

An electronic device (e.g., 101 of FIGS. 1 to 10) according to an embodiment of the disclosure may comprise a housing (e.g., 301 of FIGS. 1 to 10).

The electronic device (e.g., 101 of FIGS. 1 to 10) according to an embodiment of the present disclosure may include a display (e.g., 320 of FIGS. 1 to 10) seated on the housing (e.g., 301 of FIGS. 1 to 10).

The electronic device (e.g., 101 of FIGS. 1 to 10) according to an embodiment of the present disclosure may include a battery (e.g., 400 of FIGS. 1 to 10) disposed inside the housing (e.g., 301 of FIGS. 1 to 10).

While the disclosure has been shown and described with reference to exemplary embodiments thereof, it will be apparent to those of ordinary skill in the art that various changes in form and detail may be made thereto without departing from the spirit and scope of the disclosure as defined by the following claims.

The disclosure has been described by way of illustration with respect to an embodiment, but it should be understood that the embodiment is for illustration and not limiting the disclosure. It is apparent to those skilled in the art that various changes in form and detailed configuration may be made without departing from the overall scope of the disclosure, including the appended claims and their equivalents.

## Claims

1. A battery (400) comprising:
a cathode (420);
an anode (410) spaced apart from the cathode (420); and
a separator (430) disposed between the cathode (420) and the anode (410), wherein the anode (410) comprises:
a current collection layer (411) including a metallic material;
an electrode layer (413) spaced apart from the current collection layer (411) and including a plurality of pores (4132); and
a buffer layer (412) disposed between the current collection layer (411) and the electrode layer (413) and including a binder mixed with a conductive carbon, wherein the binder includes a compound having an elastic modulus.

2. The battery of claim 1, wherein a number of the plurality of pores (4132) varies according to a distance from the buffer layer (412).

3. The battery of claim 1 or 2, wherein a number of the plurality of pores (4132) increases as a distance from the buffer layer (412) increases.

4. The battery of any one of claims 1 to 3, wherein the electrode layer (413) comprises:
a first portion (413a) coupled to the buffer layer (412) and including a plurality of first pores (4132a);
a second portion (413b) stacked on the first portion (413a) and including a plurality of second pores (4132b), wherein a number of the plurality of second pores (4132b) is greater than a number of the plurality of first pores (4132a); and
a third portion (413c) stacked on the second portion (413b) and including a plurality of third pores (4132c), wherein a number of the plurality of third pores (4132c) is greater than a number of the plurality of second pores (4132b).

5. The battery of any one of claims 1 to 4, wherein a number of the plurality of pores (4132) increases as it is closer to the separator (430).

6. The battery of any one of claims 1 to 5, wherein the buffer layer (412) includes a mixture of the conductive carbon and the binder, and a ratio of the binder in the mixture is 10% or less.

7. The battery of any one of claims 1 to 6, wherein the binder includes polyvinylidene fluoride (PVDF).

8. The battery of any one of claims 1 to 7, wherein the binder includes carboxy methyl cellulose (CMC).

9. The battery of any one of claims 1 to 8, wherein the binder includes polyacrylic acid (PAA).

10. The battery of any one of claims 1 to 9, wherein the buffer layer (412) includes an additive added to the mixture of the conductive carbon and the binder.

11. The battery of claim 10, wherein the additive includes N-methyl-2-pyrrolidone (NMP).

12. The battery of any one of claims 1 to 11, wherein the buffer layer (412) is dried after being applied on the current collection layer (411).

13. The battery of any one of claims 1 to 12, wherein the electrode layer (413) includes graphite powder and a second binder mixed with the graphite powder and having an elastic modulus.

14. The battery of claim 13, wherein the second binder includes polytetrafluoroethylene (PTFE).

15. The battery of any one of claims 1 to 14, wherein the electrode layer (413) is rolled a plurality of times after being pressed on the buffer layer (412).
